# EUROPÄISCHE PATENTSCHRIFT

(11) **EP 2 560 878 B1**
(45) Veröffentlichungstag und Bekanntmachung des Hinweises auf die Patenterteilung: **15.06.2016**
(21) Anmeldenummer: 11715513.5
(22) Anmeldetag: 18.04.2011
(51) Int. Cl.: B64F 1/20, B64C 27/82, F21S 8/02, F21W 111/06, F21V 17/00, F21V 15/01

(54) **BELEUCHTUNGSVORRICHTUNG FÜR EINE FLUGHAFENROLLBAHN**
ILLUMINATING DEVICE FOR AN AIRPORT RUNWAY
DISPOSITIF D'ÉCLAIRAGE POUR VOIE DE CIRCULATION D'AÉROPORT

(30) Priorität: 22.04.2010 DE 102010018178
(43) Veröffentlichungstag der Anmeldung: 27.02.2013
(73) Patentinhaber: Hella KGaA Hueck & Co, 59552 Lippstadt (DE)
(72) Erfinder: ABEL, Björn, 8053 Zürich (DE); AURAS, Klaus, 59555 Lippstadt (DE); BOVEDA-PETROL, Jordina, 08980 Sant Feliu Llobregat (ES)
(74) Vertreter: Jöstingmeier, Martin
(86) Internationale Anmeldenummer: PCT/EP2011/056087
(87) Internationale Veröffentlichungsnummer: WO 2011/131599

(56) Entgegenhaltungen:
- WO-A1-88/00315
- WO-A1-92/04232
- DE-B- 1 164 950
- US-A1- 2003 193 807

## Beschreibung

Die Erfindung betrifft eine Beleuchtungsvorrichtung für eine Flughafenrollbahn mit einem Basisträger, an dem mindestens eine Leuchteinheit be-festigt ist, wobei die Leuchteinheit eine Lichtquelle, einen Reflektor und eine abde-ckende Lichtscheibe umfasst, wobei die Lichtquelle und der Reflektor zu einem gemeinsamen Leuchtmodul zusammengefasst sind und die Lichtquelle und der Reflektor auf einem gemeinsamen Träger des Leuchtmoduls montiert sind, der mit dem Basisträger lösbar verbunden ist. Eine solche Beleuchtungsvorrichtung ist aus der WO92/04232 A1 bekannt. Ähnliche Beleuchtungsvorrichtungen gehen aus der WO88/00315 A1 bzw. DE 1 164 950 B hervor.

Aus der DE 40 08 932 A1 ist eine Beleuchtungsvorrichtung für eine Flughafenrollbahn bekannt, die einen Hohlraum der Rollbahn abdeckenden scheibenförmigen Basisträger aufweist, in dem ein oder mehrere Leuchteinheiten unter Orientierung derselben in einer Richtung oder zwei Richtungen angeordnet sind. Die Leuchteinheiten weisen einen kleineren Durchmesser auf als der Basisträger und sind über eine Verschraubung lösbar mit demselben verbunden. Die Leuchteinheiten weisen jeweils eine Lichtquelle, einen Reflektor, einen dem Reflektor vorgelagerten Spiegel sowie eine abdeckende Lichtscheibe auf. Die Lichtscheibe ist als eine Linse ausgebildet, die im Wesentlichen oberhalb des Reflektors angeordnet ist. Die Leuchteinheit weist daher eine relativ große Erstreckung quer zum Basisträger auf und baut somit sehr stark nach unten hin auf. Die Leuchteinheit weist ein mit Kühlrippen versehenes Gehäuse auf, das durch Verschraubung lösbar mit einem die Lichtscheibe teilweise abdeckenden Deckelring verbunden ist. Soll wegen Beschädigung der Leuchteinheit eine Komponente derselben ausgetauscht werden, muss nicht nur die Leuchteinheit von dem Basisträger gelöst, sondern auch der Deckelring von dem Gehäuse entfernt werden.

Aufgabe der vorliegenden Erfindung ist es daher, eine Beleuchtungsvorrichtung für eine Flughafenrollbahn und ein Leuchtmodul derart weiterzubilden, dass zum einen eine in der Beleuchtungsvorrichtung integrierte Leuchteinheit einen kompakten Aufbau aufweist und zum anderen die Austauschbarkeit von Komponenten der Leuchteinheit vereinfacht wird.

Zur Lösung dieser Aufgabe ist die Erfindung in Verbindung mit dem Oberbegriff des Patentanspruchs 1 , dadurch gekennzeichnet, dass die Lichtquelle und der Reflektor zu einem gemeinsamen Leuchtmodul zusammengefasst sind, wobei die Lichtquelle und der Reflektor auf einem gemeinsamen Träger des Leuchtmoduls montiert sind, der mit dem Basisträger lösbar verbunden ist, wobei nach der Erfindung die Lichtscheibe mit einer vorzugsweise wechselbaren umlaufenden Dichtung in den Basisträger eingesetzt und dann durch die Montage des Leuchtmoduls fest in ihrer Position fixiert wird.

Durch ein Verschrauben des Leuchtmoduls an dem Basisträger wird das Leuchtmodul mit der Dichtung eingepresst. Die Lichtscheibe sowie die Dichtung werden wie das Leuchtmodul in eine entsprechend ausgeformte Ausnehmung an der Unterseite des Basisträgers angesetzt. Hierdurch kann ein einfacher, werkzeugfreier Wechsel der Lichtscheibe verwirklicht werden.

Nach der Erfindung wird ein relativ flaches und kompaktes Leuchtmodul mit einem Träger gebildet, auf dem alle lichttechnisch relevanten Komponenten montiert sind. Lediglich dieser Träger des Leuchtmoduls ist lösbar mit dem Basisträger verbunden, so dass sich das Modul in einem Wartungsfall relativ schnell austauschen lässt. Die lichttechnischen Komponenten, wie insbesondere eine Lichtquelle und ein Reflektor, lassen sich einfach von dem Träger entfernen, was den Reparaturaufwand verringert. Da die lichttechnischen Komponenten auf dem gemeinsamen Träger angeordnet sind, kann das Leuchtmodul relativ flach aufgebaut sein.

Nach einer bevorzugten Ausführungsform der Erfindung ist eine in Lichtabstrahlrichtung dem Reflektor vorgelagerte Lichtscheibe in einem zu dem Leuchtmodul bzw. dem Träger des Leuchtmoduls benachbarten Bereich des Basisträgers angeordnet. Vorteilhaft kann somit das Leuchtmodul relativ flach und kompakt ausgeführt sein.

Nach einer Weiterbildung der Erfindung ist der Träger des Leuchtmoduls als ein dreieckförmiger Körper ausgebildet, der mit einer Bodenfläche an einer Flachseite des Basisträgers anliegt und der eine Schrägfläche aufweist, auf der vorzugsweise nebeneinander die Lichtquelle und der Reflektor befestigt sind. Die lichttechnischen Komponenten, wie die Lichtquelle und der Reflektor, befinden sich somit vorzugsweise innerhalb oder oberhalb einer Ausnehmung des Basisträgers. Für Reparaturzwecke ist eine gute Zugänglichkeit der Beleuchtungsvorrichtung von oben gegeben, wobei gegebenenfalls die lichttechnischen Komponenten einzeln ausgetauscht werden können. Der Winkel der Schrägfläche zu der Erstreckungsrichtung des Basisträgers beeinflusst die Hauptabstrahlrichtung der Lichtquelle. Hierdurch kann vorteilhaft die Hauptabstrahlrichtung der Leuchteinheit eingestellt werden.

Nach einer Weiterbildung der Erfindung ist der Träger des Leuchtmoduls kraftschlüssig und/oder formschlüssig an einem Rand desselben mit dem Basisträger verbunden. Alternativ kann der Träger des Leuchtmoduls auch stoffschlüssig randseitig oder über die gesamte Fläche mit dem Basisträger verbunden sein. Vorteilhaft kann bei der kraftschlüssigen und/oder formschlüssigen Verbindung der Leuchtmodulträger einfach ausgetauscht werden.

Nach einer ersten Ausführungsform der Erfindung ist der Basisträger als eine einen Hohlraum der Rollbahn abdeckenden Abdeckscheibe ausgebildet, an deren Unterseite der Träger des Leuchtmoduls festlegbar ist. Hierbei weist der Basisträger eine Öffnung auf, durch die das Leuchtmodul mit seinen lichttechnischen Komponenten in die Montageposition hindurchgeführt und lediglich mittels Befestigung des Leuchtmodulträgers an dem Basisträger positioniert wird. Vorteilhaft hat die Beleuchtungsvorrichtung hierdurch einen relativ flachen Aufbau, da sich das Leuchtmodul im Wesentlichen innerhalb der Abdeckscheibe befindet.

Nach einer zweiten Ausführungsform der Erfindung ist der Basisträger als eine in dem Hohlraum der Rollbahn verlaufende Gehäuseplatte ausgebildet, an deren Oberseite der Leuchtmodulträger festgelegt ist. Eine Unterseite der Gehäuseplatte kann zur Ausformung eines Kühlkörpers mit Kühlrippen dienen, so dass eine verbesserte Wärmeabfuhr gegeben ist.

Nach einer Weiterbildung der Erfindung ist die Lichtquelle als ein LED-Leuchtelement bzw. als ein Mehrchip-Leuchtelement ausgebildet. Hierdurch weist die Leuchteinheit einen relativ platzsparenden Aufbau auf.

Ausführungsbeispiele der Erfindung werden nachfolgend anhand der Zeichnungen näher erläutert.

Es zeigen:
- Fig. 1: eine Unten- und Seitenansicht eines Basisträgers mit zwei Ausnehmungen für die Aufnahme von jeweils einem Leuchtmodul für zwei Leuchteinheiten nach einer ersten Ausführungsform,
- Fig. 2: eine Seitenansicht des Basisträgers gemäß Figur 1 um 90° versetzt dargestellt,
- Fig. 3: eine perspektivische Darstellung eines Doppel-Reflektors des in die Ausnehmung des Basisträgers eingesetzten Leuchtmoduls,
- Fig. 4: eine Draufsicht auf das Leuchtmodul,
- Fig. 5: eine Explosionsdarstellung des Leuchtmoduls von einer Längsseite her gesehen,
- Fig. 6: eine Explosionsdarstellung des Leuchtmoduls von einer Schmalseite her gesehen und
- Fig. 7: eine perspektivische Darstellung einer Beleuchtungsvorrichtung nach einer zweiten Ausführungsform mit einem Basisträger, der untenseitig einen Kühlkörper aufweist.

Eine erfindungsgemäße Beleuchtungsvorrichtung kann vorzugsweise auf Flughäfen eingesetzt werden, um zur Beleuchtung einer Fahr- oder Rollbahn zu dienen.

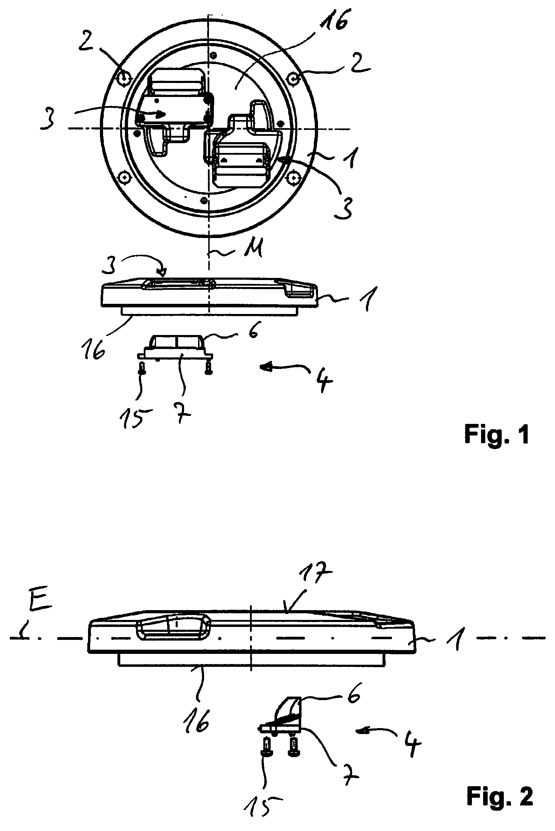

Nach einer ersten Ausführungsform der Erfindung gemäß den Figuren 1 bis 6 weist die Beleuchtungsvorrichtung einen scheibenförmigen Basisträger 1 auf, der als Abdeckscheibe einen Hohlraum der Rollbahn abdeckt. Zur Schraubbefestigung des Basisträgers 1 an einem nicht dargestellten Boden weist der Basisträger 1 randseitig Bohrungen 2 auf. Der Basisträger 1 weist zu beiden Seiten einer Quermittelebene M eine Ausnehmung 3 zur Aufnahme eines Leuchtmoduls 4 auf. Die Ausnehmungen 3 sind derart ausgebildet, dass im Wesentlichen Leuchtmodule 4 gleicher Abmessung eingesetzt werden können, die in zwei unterschiedlichen Richtungen Licht abstrahlen.

Das Leuchtmodul 4 weist eine Lichtquelle 5 sowie einen Reflektor 6 auf, die jeweils auf einem gemeinsamen Leuchtmodulträger 7 des Leuchtmoduls 4 montiert sind. Der Leuchtmodulträger 7 ist als ein dreieckförmiger Körper ausgebildet, der zum einen eine Bodenfläche 8 aufweist, die in der Montageposition in einer Erstreckungsebene E des Basisträgers 1 verläuft. Ferner weist der Leuchtmodulträger 7 eine sich in einem spitzen Winkel zu der Bodenfläche 8 verlaufende Schrägfläche 9 auf, auf der eine mit der Lichtquelle 5 bestückte Leiterplatte 10 montiert ist.

Die Lichtquelle 5 ist als ein Mehrchip-LED-Leuchtelement ausgebildet, wobei beispielsweise auf der Leiterplatte 10 drei LED-Chips 5 angeordnet sein können. Im vorliegenden Ausführungsbeispiel ist der Reflektor 6 als ein Doppelkammerreflektor ausgebildet, wobei einer ersten Reflektorkammer 6' ein erstes LED-Leuchtelement 5" und einer zweiten Reflektorkammer 6" ein zweites LED-Leuchtelement 5" zugeordnet ist. Der Doppelkammerreflektor 6 weist neben den Reflektorflächen 6', 6" zusätzlich einen Befestigungsrahmen 11 auf, der über Bohrungen 12 verfügt, damit der Doppelkammerreflektor 6 beispielsweise durch Verschrauben kraftschlüssig an der Schrägfläche 9 montierbar ist.

Die Leiterplatten 10 können beispielsweise form- oder kraftschlüssig an der Schrägfläche 9 befestigt sein.

Ein Winkel zwischen der Schrägfläche 9 und der Bodenfläche 8 ist derart bemessen, dass das von den Lichtquellen 5', 5" emittierte Licht nach Reflexion an den Reflektorflächen der Reflektorkammern 6', 6" unter einem vorgegebenen Winkel in die Umgebung abgestrahlt wird.

An gegenüberliegenden Stirnseiten des Leuchtmodulträgers 7 sind seitlich abragende Befestigungsansätze 13 mit Bohrungen 14 vorgesehen zur kraftschlüssigen Verbindung des Leuchtmodulträgers 7 mit dem Basisträger 1. Im vorliegenden Ausführungsbeispiel sind drei Bohrungen 14 vorgesehen, damit unter Verwendung von drei Schrauben 15 eine Schraubverbindung mit Basisträger 1 erfolgen kann. Der Leuchtmodulträger 7 ist an einer Unterseite 16 des Basisträgers 1 festlegbar.

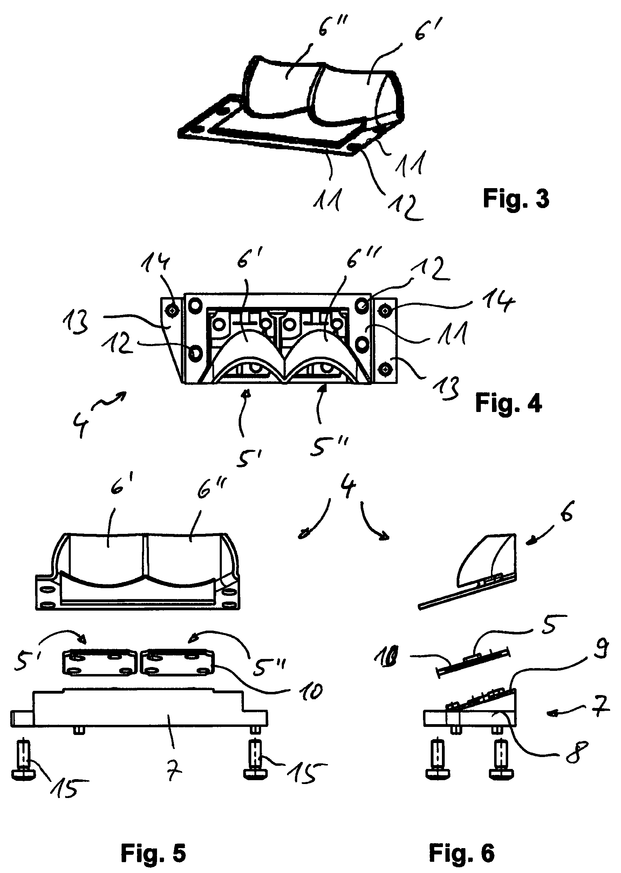

Wie aus Figur 4 zu ersehen ist, erfolgt die Befestigung des Leuchtmodulträgers 7 an dem Basisträger 1 und die Befestigung des Reflektors 6 an dem Leuchtmodulträger 7 in Projektion auf die Erstreckungsebene E nebeneinander, so dass beispielsweise der Reflektor 6 von oben her zugänglich und auswechselbar ist, ohne dass das Leuchtmodul 4 von dem Basisträger 1 gelöst werden müsste.

Nach einer nicht dargestellten alternativen Ausführungsform kann der Leuchtmodulträger 7 auch formschlüssig oder stoffschlüssig mit dem Basisträger 1 verbunden sein.

Vorzugsweise ist der Leuchtmodulträger 7 lediglich an einem Rand desselben mit dem Basisträger 1 lösbar verbunden.

Da der Leuchtmodulträger 7 umlaufend in der Ausnehmung 3 des Basisträgers 1 angeordnet ist, ist er in der Lage, die durch die Lichtquellen 5 erzeugte Wärme in den Basisträger 1 abzuführen.

An einer Oberseite 17 des Basisträgers 1 ist eine nicht dargestellte Lichtscheibe befestigt, die als prismenförmige Glasplatte ausgebildet ist und durch die das von dem Reflektor 6 umgelenkte Lichtbündel nach außen in die Umgebung hindurchtritt. Die Lichtscheibe ist in einem zu dem Leuchtmodul 4 benachbarten Bereich des Basisträgers 1 angeordnet. Sie ist in gleicher Höhe zu den Reflektoren 6 angeordnet, so dass die Beleuchtungsvorrichtung nach oben hin nicht weiter aufbaut. Die Lichtscheibe und das Leuchtmodul 4 befinden sich somit in einem gleichen Höhenbereich des Basisträgers 1.

Die Lichtscheibe bildet zusammen mit dem Leuchtmodul 4 eine Leuchtein-heit.

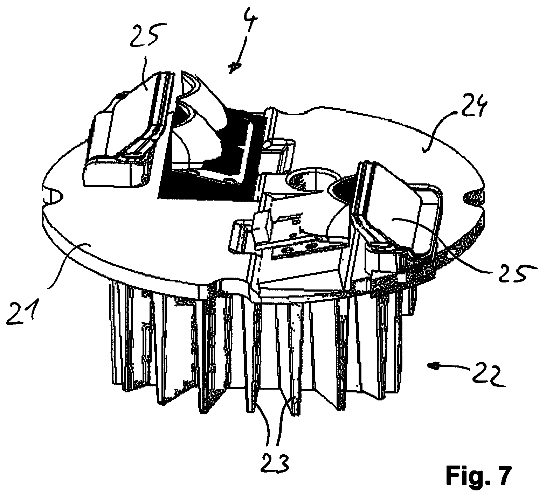

Nach einer zweiten Ausführungsform der Erfindung gemäß Figur 7 ist ein Basisträger 21 der Beleuchtungsvorrichtung als eine in den Hohlraum der Rollbahn verlaufende Gehäuseplatte ausgebildet, an deren Unterseite sich ein Kühlkörper 22 mit Kühlrippen 23 anschließt. An einer Oberseite 24 des Basisträgers 21 ist das Leuchtmodul 4 nach der ersten Ausführungsform durch Schraubverbindung befestigt. Im Unterschied zu der ersten Ausführungsform wird das Leuchtmodul 4 nicht von unten her, sondern von oben an dem Basisträger 21 befestigt. In einem zu dem Leuchtmodul 4 benachbarten Bereich des Basisträgers 21 ist eine Lichtscheibe 25 angeordnet, durch die das von dem Leuchtmodul 4 abgestrahlte Licht in die Umgebung hindurchtritt. Die Lichtscheibe 25 bildet zusammen mit dem Leuchtmodul 4 die Leuchteinheit. Wie bei der ersten Ausführungsform befinden sich das Leuchtmodul 4 und die Lichtscheibe 25 auf einer gemeinsamen Flachseite des Basisträgers 21, in diesem Fall der Oberseite 24.

Der Basisträger 21 ist vorzugsweise aus einem Aluminiummaterial gefertigt.

Nach der ersten Ausführungsform der Erfindung gemäß den Ansprüchen 1 bis 6 wird die Lichtscheibe mit einer vorzugsweise wechselbaren umlaufenden Dichtung in den Basisträger 1 eingesetzt und dann durch die Montage des Leuchtmoduls 4 fest in ihrer Position fixiert. Durch das Verschrauben des Leuchtmoduls 4 an dem Basisträger 1 wird das Leuchtmodul 4 mit der Dichtung eingepresst. Die Lichtscheibe sowie die Dichtung werden wie das Leuchtmodul 4 in eine entsprechend ausgeformte Ausnehmung an der Unterseite 16 des Basisträgers 1 angesetzt. Hierdurch kann ein einfacher, werkzeugfreier Wechsel der Lichtscheibe verwirklicht werden.

### Bezugszeichenliste

- 1: Basisträger
- 2: Bohrungen
- 3: Ausnehmungen
- 4: Leuchtmodule
- 5, 5', 5": Lichtquelle
- 6, 6', 6": Reflektor
- 7: Leuchtmodulträger
- 8: Bodenfläche
- 9: Schrägflächen
- 10: Leiterplatte
- 11: Befestigungsrahmen
- 12: Bohrungen
- 13: Befestigungsansätze
- 14: Bohrungen
- 15:
- 16: Unterseite
- 17: Oberseite

- 22: Basisträger
- 23: Kühlrippen
- 24: Oberseite
- 25: Lichtscheibe
- M: Quermittelebene
- E: Erstreckungsebene

## Patentansprüche

1. Beleuchtungsvorrichtung für eine Flughafenrollbahn mit einem Basisträger (1), an dem mindestens eine Leuchteinheit befestigt ist, wobei die Leuchteinheit eine Lichtquelle (5), einen Reflektor (6) und eine abdeckende Lichtscheibe umfasst, wobei die Lichtquelle (5) und der Reflektor (6) zu einem gemeinsamen Leuchtmodul (4) zusammengefasst sind und die Lichtquelle (5) und der Reflektor (6) auf einem gemeinsamen Träger (7) des Leuchtmoduls (4) montiert sind, der mit Basisträger (1, 21) lösbar verbunden ist, **dadurch gekennzeichnet, dass** die Lichtscheibe (25) über eine Dichtung in eine Ausnehmung des Basisträgers (1) einsetzbar ist und durch Fixieren des Leuchtmoduls (4) an dem Basisträger (1) in der eingesetzten Position eingepresst ist.

2. Beleuchtungsvorrichtung nach Anspruch 1 , **dadurch gekennzeichnet, dass** die Lichtscheibe (25) in einem zu dem Leuchtmodul (4) benachbarten Bereich des Basisträgers (1, 21) an demselben befestigt ist.

3. Beleuchtungsvorrichtung nach Anspruch 1 oder 2, **dadurch gekennzeichnet, dass** das Leuchtmodul (4) und die Lichtscheibe (25) auf einer gemeinsamen Flachseite des Basisträgers (1, 21) angeordnet sind.

4. Beleuchtungsvorrichtung nach einem der Ansprüche 1 bis 3, **dadurch gekennzeichnet, dass** der Träger (7) des Leuchtmoduls (4) kraftschlüssig und/oder formschlüssig an einem Rand desselben oder stoffschlüssig mit dem Basisträger (1, 21) verbunden ist.

5. Beleuchtungsvorrichtung nach einem der Ansprüche 1 bis 4, **dadurch gekennzeichnet, dass** der Basisträger als eine einen Hohlraum der Rollbahn abdeckenden Abdeckscheibe (1) ausgebildet ist, an deren Unterseite (16) der Träger (7) des Leuchtmoduls (4) festlegbar ist.

6. Beleuchtungsvorrichtung nach einem der Ansprüche 1 bis 4, **dadurch gekennzeichnet, dass** der Basisträger als eine in dem Hohlraum der Rollbahn verlaufende Gehäuseplatte (21) ausgebildet ist, an deren Oberseite (24) der Träger (7) des Leuchtmoduls (4) und die Lichtscheibe (25) festgelegt sind, und dass sich an einer Unterseite der Gehäuseplatte (21) ein Kühlkörper (22) anschließt.

7. Beleuchtungsvorrichtung nach einem der Ansprüche 1 bis 6, **dadurch gekennzeichnet, dass** die Lichtquelle (5) als ein LED-Leuchtelement oder als ein Mehrchip-LED-Leuchtelement (5', 5") ausgebildet ist und dass der Reflektor (6) als ein Ein- oder Mehrkammerreflektor ausgebildet ist, wobei jeder Reflektorkammer (6', 6") eine Lichtquelle (5', 5") zugeordnet sind.

8. Beleuchtungsvorrichtung nach einem der Ansprüche 1 bis 7, **dadurch gekennzeichnet, dass** die Lichtscheibe (25) als eine Glasplatte ausgebildet ist.

## Claims

1. Illumination device for an airport taxiway having a base support (1), on which at least one lighting unit is mounted, wherein the lighting unit comprises a light source (5), a reflector (6) and a covering light pane, wherein the light source (5) and the reflector (6) are integrated to a common lighting module (4), and the light source (5) and the reflector (6) are mounted on a common support (7) of the lighting module (4), which support (7) is removably attached to the base support (1, 21), **characterized in that**
the light pane (25) is insertable in a recess of the base support (1) through a sealing, and is press-fitted by fixing the lighting module (4) at the base support (1) in the inserted position.

2. Illumination device according to claim 1, **characterized in that** the light pane (25) is mounted to the base support (1, 21) in an area of said base support being adjacent to the lighting module (4).

3. Illumination device according to claim 1 or 2, **characterized in that** the lighting module (4) and the light pane (25) are arranged on a common flat side of the base support (1, 21).

4. Illumination device according to one of claims 1 to 3, **characterized in that** the support (7) of the lighting module (4) is attached force-fittingly and/or form-fittingly at an edge of said lighting module, or is attached firmly bonded with the base support (1; 21).

5. Illumination device according to one of claims 1 to 4, **characterized in that** the base support is configured as a cover pane (1) covering a cavity in the taxiway, wherein the support (7) of the lighting module (4) is fixable at the bottom side (16) of said cover pane.

6. Illumination device according to one of claims 1 to 4, **characterized in that** the base support is configured as a housing plate (21) extending in the cavity of the taxiway, wherein at the top side (24) of said housing panel the support (7) of the lighting module (4) and the light pane (25) are fixed, and that a heat sink (22) abuts at the bottom side of the housing plate (21).

7. Illumination device according to one of claims 1 to 6, **characterized in that** the light source (5) is configured as an LED lighting element or as a multi-chip LED lighting element (5', 5"), and that the reflector (6) is configured as a single- or multichamber reflector, wherein a light source (5', 5") is assigned to each reflector chamber (6', 6"), respectively.

8. Illumination device according to one of claims 1 to 7, **characterized in that** the light pane (25) is formed as a glass plate.

## Revendications

1. Dispositif d'éclairage pour une voie de circulation d'une aéroport avec un support de base (1) sur lequel est fixée au moins une unité de lampe, laquelle unité de lampe comprend une source lumineuse (5), un réflecteur (6) et une vitre qui les recouvre, la source lumineuse (5) et le réflecteur (6) étant regroupés en un module de lampe (4) commun, et la source lumineuse (5) et le réflecteur (6) étant montés sur un support (7) commun du module de lampe (4) qui est relié de façon amovible au support de base (1, 21), **caractérisé en ce que** la vitre (25) peut être inséré, par l'intermédiaire d'un joint d'étanchéité, dans un évidement du support de base (1) et calé dans la position insérée par la fixation du module de lampe (4) sur le support de base (1).

2. Dispositif d'éclairage selon la revendication 1, **caractérisé en ce que** la vitre (25) est fixé sur le support de base (1, 21) dans une zone de celui-ci voisine du module de lampe (4).

3. Dispositif d'éclairage selon la revendication 1 ou 2, **caractérisé en ce que** le module de lampe (4) et la vitre (25) sont disposés sur un côté plat commun du support de base (1, 21).

4. Dispositif d'éclairage selon l'une des revendications 1 à 3, **caractérisé en ce que** le support (7) du module de lampe (4) est relié par accouplement mechanique et/ou par correspondance de forme à un bord de celui-ci ou relié par solidarité de matière au support de base (1, 21).

5. Dispositif d'éclairage selon l'une des revendications 1 à 4, **caractérisé en ce que** le support de base est conformé comme une plaque de couverture (1) fermant un évidement dans la voie de circulation, sur la face inférieure (16) de laquelle le support (7) du module de lampe (4) peut être fixé.

6. Dispositif d'éclairage selon l'une des revendications 1 à 4, **caractérisé en ce que** le support de base est conformé comme un panneau de boîtier (21) qui s'étend dans l'évidement de la voie de circulation, sur la face supérieure (24) duquel le support (7) du module de lampe (4) et la vitre (25) sont fixés, et **en ce qu'**un dissipateur de chaleur (21) se raccorde sur une face inférieure du panneau de boîtier (21).

7. Dispositif d'éclairage selon l'une des revendications 1 à 6, **caractérisé en ce que** la source lumineuse (5) est conçue comme un élément lumineux à DEL ou comme un élément lumineux à DEL multipuce (5', 5") et **en ce que** le réflecteur (6) est conformé comme un réflecteur à une ou plusieurs chambres, une source lumineuse (5', 5") étant associée à chaque chambre (6', 6") du réflecteur.

8. Dispositif d'éclairage selon l'une des revendications 1 à 7, **caractérisé en ce que** la vitre (25) est conformé comme une plaque de verre.
